# EUROPÄISCHE PATENTSCHRIFT

(11) **EP 3 344 542 B1**
(45) Veröffentlichungstag und Bekanntmachung des Hinweises auf die Patenterteilung: **27.01.2021**
(21) Anmeldenummer: 16760033.7
(22) Anmeldetag: 29.08.2016
(51) Int. Cl.: B64D 11/06, B60N 2/70

(54) **FLUGZEUGSITZVORRICHTUNG**
AIRPLANE SEAT DEVICE
DISPOSITIF FORMANT SIÈGE D'AVION

(30) Priorität: 02.09.2015 DE 102015114677
(43) Veröffentlichungstag der Anmeldung: 11.07.2018
(73) Patentinhaber: Recaro Aircraft Seating GmbH & Co. KG, 74523 Schwäbisch Hall (DE)
(72) Erfinder: SCHUMM, Andreas, 74670 Forchtenberg (DE)
(74) Vertreter: Daub, Thomas
(86) Internationale Anmeldenummer: PCT/EP2016/070312
(87) Internationale Veröffentlichungsnummer: WO 2017/037016

(56) Entgegenhaltungen:
- EP-A1- 1 214 900
- EP-A2- 1 000 856
- AT-A4- 509 326
- GB-A- 2 502 508
- US-A- 2 722 267
- US-A1- 2012 139 302

## Beschreibung

### Stand der Technik

Die Erfindung betrifft eine Flugzeugsitzvorrichtung nach dem Oberbegriff des Patentanspruchs 1.

Es sind bereits Flugzeugsitzvorrichtungen mit einem Sitzbodenmodul, das wenigstens einen Grundkörper, der zumindest im Wesentlichen aus einem Hartschaum ausgebildet ist, wenigstens ein auf einer Oberseite des Grundkörpers angeordnetes Komfortelement, wenigstens einen Aufnahmebereich zur Anbindung an ein Tragrohr und wenigstens ein Befestigungselement zur Anbindung an das Tragrohr aufweist, vorgeschlagen worden.

Die Aufgabe der Erfindung besteht insbesondere darin, eine gattungsgemäße Vorrichtung - wie beispielsweise aus EP 1000856 A2 bekannt - mit verbesserten Eigenschaften hinsichtlich Kosten und Servicefreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einem Sitzbodenmodul, das wenigstens einen Grundkörper, der zumindest im Wesentlichen aus einem Hartschaum ausgebildet ist, wenigstens ein auf einer Oberseite des Grundkörpers angeordnetes Komfortelement, wenigstens einen Aufnahmebereich zur Anbindung an ein Tragrohr und wenigstens ein Befestigungselement zur Anbindung an das Tragrohr aufweist.

Es wird vorgeschlagen, dass der Grundkörper wenigstens zwei Kopplungsbereiche aufweist, über die das wenigstens eine Befestigungselement wahlweise an den Grundkörper angebunden werden kann. Unter einem "Sitzbodenmodul" soll dabei insbesondere ein Modul eines Flugzeugsitzes verstanden werden, das den Sitzbereich für einen Passagier ausbildet, wobei das Sitzbodenmodul dabei vorzugsweise von einem Grundkörper und einem auf dem Grundkörper angebrachten Komfortelement gebildet ist. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Unter einem "Flugzeugsitz" soll dabei insbesondere ein Sitz verstanden werden, der dazu vorgesehen ist, in einer Flugzeugkabine eines Flugzeugs aufgeständert zu werden. Dabei weist der Flugzeugsitz vorzugsweise eine Aufständereinheit auf, mittels der der Flugzeugsitz auf einem Kabinenboden der Flugzeugkabine fest aufständerbar ist. Unter einem "Grundkörper" sollte dabei insbesondere eine tragende Struktur, insbesondere des Sitzbodenmoduls, verstanden werden. Unter "zumindest im Wesentlichen aus einem Hartschaum" soll dabei insbesondere zumindest zu mehr als 50 %, vorzugsweise zu mehr als 80 % und in einer besonders vorteilhaften Ausgestaltung zu mehr als 90 % aus einem Hartschaum gebildet verstanden werden. Vorzugsweise ist der Grundkörper komplett aus einem Hartschaum gebildet. Unter einer "Oberseite des Grundkörpers" soll dabei insbesondere eine Seite des Grundkörpers verstanden werden, die in einem montierten Zustand von einer Aufständerebene, auf der der Flugzeugsitz aufgeständert ist, weggerichtet ist. Unter einem "Komfortelement" soll dabei insbesondere ein Element verstanden werden, das den Sitzbereich für den Passagier bildet und dabei insbesondere einen wechselbaren und/oder gepolsterten Untergrund ausbildet. Das Komfortelement weist dabei vorzugsweise einen Bezug auf, der den Sitzbereich umgibt, wobei der Bezug dabei beispielsweise aus einem Textil, einem Leder oder einem anderen, dem Fachmann als sinnvoll erscheinenden Material gebildet sein kann. Vorzugsweise weist das Komfortelement ein Polster auf, das beispielsweise aus einem Weichschaum gebildet sein kann, wobei das Polster dabei vorzugsweise von dem Bezug umgeben ist. Grundsätzlich ist es auch denkbar, dass der Bezug einstückig mit dem Polster ausgebildet ist oder auch dass das Komfortelement kein Polster oder keinen Bezug aufweist. Unter einem "Aufnahmebereich" soll dabei insbesondere ein Bereich verstanden werden, der dazu vorgesehen ist, dass Elemente, mit denen das Sitzbodenmodul gekoppelt ist, zumindest teilweise darin angeordnet sind. Unter einem "Tragrohr" soll dabei insbesondere ein Querträger eines Flugzeugsitzes verstanden werden, der quer zu einer Sitzrichtung des Flugzeugsitzes verläuft und einen Teil einer Tragstruktur des Flugzeugsitzes bildet, wobei das Tragrohr dabei vorzugsweise die Tragstruktur von mehreren Flugzeugsitzen, die eine Sitzreihe bilden, ausbildet. Unter einem "Kopplungsbereich" soll dabei insbesondere ein Bereich verstanden werden, über den das Befestigungselement fest mit dem Grundkörper gekoppelt werden kann. Ein Kopplungsbereich weist dabei vorzugsweise jeweils wenigstens einen Bereich auf, in dem ein Befestigungselement form-, kraft- und/oder stoffschlüssig mit dem Grundkörper verbindbar ist. Dabei ist es denkbar, dass die Befestigungselemente in einem Kopplungsbereich über eine Klebeverbindung oder über ein Formschlusselement mit dem Grundkörper gekoppelt sind. Grundsätzlich ist es ebenfalls denkbar, dass die Befestigungselemente in einem Kopplungsbereich in den Grundkörper eingebracht sind, also beispielsweise in den Grundkörper eingespritzt sind oder bei einem Schäumverfahren in den Grundkörper integriert sind. Vorzugsweise weist der Kopplungsbereich zwei beabstandet zueinander angeordnete Durchgangslöcher auf, die in den Grundkörper eingebracht sind und jeweils von einer Unterseite des Grundkörpers bis an die Oberseite des Grundkörpers reichen und durch die das als Band ausgebildete Befestigungselement geführt werden kann, um eine formschlüssige Verbindung mit dem Grundkörper einzugehen. Vorzugsweise weist der Grundkörper je Anbindungsbereich wenigstens zwei, vorzugsweise vier Kopplungsbereiche auf. Dadurch kann das Sitzbodenmodul besonders einfach und vorteilhaft ausgebildet werden und so insbesondere eine Flugzeugsitzvorrichtung bereitgestellt werden, die besonders kostengünstig und einfach im Service ist. Insbesondere kann der Grundkörper dadurch vorteilhaft sicher und variabel mit den Tragrohren gekoppelt werden.

Es wird weiter vorgeschlagen, dass die Kopplungsbereiche in den Aufnahmebereichen angeordnet sind. Unter "in den Aufnahmebereichen angeordnet", soll dabei insbesondere verstanden werden, dass ein Element oder ein Bereich, insbesondere ein Kopplungsbereich, zumindest teilweise deckungsgleich mit dem Aufnahmebereich ausgebildet ist. Dabei befindet sich zumindest ein Teil, vorzugsweise ein gesamter Kopplungsbereich in dem Aufnahmebereich. Dadurch können die Kopplungsbereiche besonders vorteilhaft zur Anbindung von Befestigungselementen angeordnet werden.

Erfindungsgemäß wird vorgeschlagen, dass das Sitzbodenmodul wenigstens einen Abstandshalter aufweist, der in einem montierten Zustand in dem wenigstens einen Aufnahmebereich angeordnet und dazu vorgesehen ist, den Grundkörper und das Tragrohr voneinander zu beabstanden. Unter einem "Abstandshalter" soll dabei insbesondere ein Element verstanden werden, das dazu vorgesehen ist, zwischen zwei Elementen, wie insbesondere dem Grundkörper und dem Tragrohr, angeordnet zu werden, um einen Abstand zwischen diesen beiden Elementen herzustellen. Dabei berühren sich die beiden Elemente, die über die Abstandshalter voneinander getrennt sind, nicht. Eine Kraftübertragung, insbesondere eine Druckkraftübertragung, zwischen den beiden Elementen, wie insbesondere dem Grundkörper und dem Tragrohr, findet über den wenigstens einen Abstandshalter statt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann eine Anbindung an das Tragrohr vorzugsweise so erfolgen, dass andere Anbindungselemente, beispielsweise für Sitzfüße, in montiertem Zustand nicht mit dem Grundkörper des Sitzbodenmoduls kollidieren. Dadurch kann der Grundkörper vorteilhaft einfach ausgebildet werden, da keine Aussparungen für entsprechende Anbindungselemente in dem Grundkörper vorgesehen werden müssen.

Außerdem wird vorgeschlagen, dass das Sitzbodenmodul in dem wenigstens einen Aufnahmebereich zumindest ein Formschluss- und/oder Kraftschlusselement aufweist, über das der Abstandshalter verliersicher in dem Aufnahmebereich befestigbar ist. Unter einem "Formschluss- und/oder Kraftschlusselement" soll dabei insbesondere ein Element verstanden werden, über das ein Element, wie insbesondere ein Abstandshalter, form- und/oder kraftschlüssig mit dem Grundkörper verbunden werden kann. Dabei ist das Formschluss- und/oder Kraftschlusselement vorzugsweise als eine Ausnehmung ausgebildet, die kleiner ausgebildet ist als ein korrespondierendes Formschluss- und/oder Kraftschlusselement des Abstandshalters, das als ein Zapfen ausgebildet ist. Während eines Montagevorgangs bei dem der Abstandshalter über sein als Zapfen ausgebildetes Formschluss- und/oder Kraftschlusselement mit dem als Ausnehmung ausgebildeten Formschluss- und/oder Kraftschlusselement des Aufnahmebereichs verbunden wird, schneidet das als Zapfen ausgebildete Formschluss- und/oder Kraftschlusselement in den Grundkörper, der das als Ausnehmung ausgebildete Formschluss- und/oder Kraftschlusselement des Aufnahmebereichs ausbildet, wodurch ein Form- und/oder Kraftschluss entsteht. Dadurch kann der wenigstens eine Abstandshalter vorteilhaft einfach mit dem Grundkörper verbunden werden.

Ferner wird vorgeschlagen, dass das Sitzbodenmodul in dem wenigstens einen Aufnahmebereich weitere, zueinander beabstandet angeordnete Formschluss- und/oder Kraftschlusselemente aufweist, über die der wenigstens eine Abstandshalter verliersicher in dem Aufnahmebereich befestigbar ist. Unter einem "weiteren Formschluss- und/oder Kraftschlusselement" soll bzw. sollen dabei insbesondere wenigstens ein, vorzugsweise mehrere beabstandet zueinander angeordnete, in dem Aufnahmebereich verteilte Formschluss- und/oder Kraftschlusselemente verstanden werden, die insbesondere identisch ausgebildet werden, sodass zeitgleich wenigstens zwei Abstandshalter kraft- und/oder formschlüssig in dem Aufnahmebereich angeordnet werden können. Vorzugsweise sind in dem Aufnahmebereich mehr als vier Formschluss- und/oder Kraftschlusselemente angeordnet, sodass die Abstandshalter zumindest in vier verschiedenen Positionen in dem Aufnahmebereich angeordnet werden können. Dadurch kann der Aufnahmebereich besonders vorteilhaft flexibel ausgebildet werden und die Abstandshalter können, je nach Ausgestaltung des entsprechenden Flugzeugsitzes, je nach einer Anordnung von Sitzfüßen, unterschiedlich in dem Aufnahmebereich angeordnet werden.

Weiter wird vorgeschlagen, dass das wenigstens eine Befestigungselement als ein Band ausgebildet ist, über das der Grundkörper mit dem Tragrohr verbindbar ist. Unter einem "als Band ausgebildeten Befestigungselement" soll dabei insbesondere ein Befestigungselement verstanden werden, das die Form eines Bandes aufweist und eine Breite von mehr als 5 mm aufweist. Dabei ist das als Band ausgebildete Befestigungselement vorzugsweise als ein aus einem Textil gebildetes Flausch- und Hakenband ausgebildet. Grundsätzlich wäre es auch denkbar, dass das als Band ausgebildete Befestigungselement beispielsweise als ein Textilband ausgebildet ist, das an einem ersten Ende ein als Haken ausgebildetes Formschlusselement und an einem zweiten Ende mehrere, beabstandet zueinander angeordnete, als Ausnehmung ausgebildete Formschlusselemente aufweist, über die die beiden Enden in verschiedenen Längen miteinander verbunden werden können. Grundsätzlich wäre es auch denkbar, dass das als Band ausgebildete Befestigungselement als ein breiter Kabelbinder oder ein ähnliches, dem Fachmann als sinnvoll erscheinendes Befestigungselement ausgebildet ist. Dadurch kann das Sitzbodenmodul besonders einfach und kostengünstig mit einer Tragstruktur, insbesondere dem wenigstens einen Tragrohr des Flugzeugsitzes, verbunden werden.

Es wird weiter vorgeschlagen, dass das wenigstens eine Befestigungselement als ein Flausch- und Hakenband ausgebildet ist. Dadurch kann das Befestigungselement besonders vorteilhaft ausgebildet werden.

Zudem wird vorgeschlagen, dass das wenigstens eine Befestigungselement wenigstens einen Anbindungsbereich aufweist, über den das Komfortelement fest mit dem Befestigungselement verbindbar ist. Unter einem "Anbindungsbereich" soll dabei insbesondere ein Bereich verstanden werden, der wenigstens ein Mittel zur Herstellung einer form- und/oder kraftschlüssigen Verbindung aufweist. Dabei ist in dem Anbindungsbereich vorzugsweise wenigstens ein Flausch- und/oder Hakenband angeordnet. Grundsätzlich ist es auch denkbar, dass in dem Anbindungsbereich wenigstens ein anderes, dem Fachmann als sinnvoll erscheinendes Form- und/oder Kraftschlusselement angeordnet ist, wie beispielsweise ein Druckknopf oder ein Rastelement. Dabei ist es denkbar, dass der Grundkörper zusätzliche Anbindungsbereiche aufweist, die ebenfalls zur Anbindung des Komfortelements vorgesehen sind. Dadurch kann das Komfortelement besonders einfach mit dem Grundkörper verbunden werden, wobei insbesondere das zur Kopplung des Grundkörpers mit dem Tragrohr verwendete Befestigungselement zusätzlich zur Anbindung des Komfortelements genutzt werden kann.

Weiterhin wird vorgeschlagen, dass der Anbindungsbereich des wenigstens einen Befestigungselements als ein Flausch- oder Hakenbereich ausgebildet ist. Dadurch kann der Anbindungsbereich besonders vorteilhaft ausgebildet werden.

Außerdem wird vorgeschlagen, dass das Sitzbodenmodul wenigstens ein auf einer Unterseite des Grundkörpers angeordnetes Verstärkungselement aufweist. Unter einer "Unterseite des Grundkörpers" soll dabei insbesondere eine Seite des Grundkörpers verstanden werden, die in einem montierten Zustand der Aufständerebene, auf der der Flugzeugsitz aufgeständert ist, zugewandt ist. Unter einem "Verstärkungselement" soll dabei insbesondere ein Element verstanden werden, das eine Festigkeit und/oder eine Steifigkeit des Grundkörpers erhöht, wobei das Verstärkungselement dabei einstückig mit dem Grundkörper ausgebildet sein kann oder als ein separates, auf eine dem Fachmann als sinnvoll erscheinende Methode mit dem Grundkörper verbundenes Element ausgebildet sein kann. Vorzugsweise ist das Verstärkungselement als ein separates Element ausgebildet, welches fest auf der Unterseite des Grundkörpers angeordnet ist. Grundsätzlich ist es auch denkbar, dass das Verstärkungselement einstückig mit dem Grundkörper als eine Rippe oder Materialaufdickung ausgebildet ist. Grundsätzlich ist es auch denkbar, dass das Verstärkungselement als ein Einleger ausgebildet ist. Grundsätzlich ist es auch denkbar, dass das Verstärkungselement aus dem gleichen Material wie der Grundkörper gebildet ist und lediglich durch ein entsprechendes Herstellverfahren eine größere Dichte aufweist. Dadurch kann der Grundkörper in Bereichen, in denen die Verstärkungselemente angeordnet sind, besonders vorteilhaft dünn ausgebildet werden, um so insbesondere einen Raum für Anbauteile zu schaffen.

Weiter wird vorgeschlagen, dass der wenigstens eine Aufnahmebereich zur Anbindung an eines der Tragrohre von dem Grundkörper ausgebildet und beabstandet zu dem wenigstens einen Verstärkungselement angeordnet ist. Unter "beabstandet angeordnet" soll dabei insbesondere verstanden werden, dass der Aufnahmebereich und das wenigstens eine Verstärkungselement in unschädlichen Bereichen des Grundkörpers angeordnet sind und sich diese Bereiche insbesondere nicht überschneiden. Dadurch kann das Sitzbodenmodul besonders vorteilhaft ausgebildet werden.

Es wird weiter vorgeschlagen, dass das Verstärkungselement von einer im Wesentlichen dünnen Kunststoffschicht gebildet ist. Unter "zumindest im Wesentlichen von einer dünnen Kunststoffschicht gebildet", soll dabei insbesondere verstanden werden, dass das Verstärkungselement, auf seine Fläche bezogen, zumindest zu 50 %, vorzugsweise zu mehr als 75 % und in einer besonders vorteilhaften Ausgestaltung zu mehr als 90 % von einer dünnen Kunststoffschicht gebildet ist. Unter einer "dünnen Kunststoffschicht" soll dabei eine Schicht aus einem Kunststoff verstanden werden, die eine Dicke von weniger als 5 mm aufweist, vorzugsweise von 1,5 mm. Dabei wird der Grundkörper in einem Herstellungsverfahren vorzugsweise auf die fertigen Verstärkungselemente aufgeschäumt und dabei form-, kraft- und/oder stoffschlüssig mit den Verstärkungselementen verbunden. Grundsätzlich ist es auch denkbar, dass die Verstärkungselemente in einem Verfahrensschritt nach dem Schäumen des Grundkörpers mittels eines dem Fachmann als sinnvoll erscheinenden Verfahrens, beispielsweise mittels eines Klebeverfahrens, fest mit der Unterseite des Grundkörpers verbunden werden. Dadurch kann das Verstärkungselement besonders vorteilhaft und platzsparend ausgebildet werden, wodurch eine Material- und dadurch Platzeinsparung an dem Grundkörper besonders vorteilhaft ist und so ein besonders vorteilhaft großer Raum für Anbauteile, wie beispielsweise eine HIC-Koppel, geschaffen werden kann.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugvorrichtung mit dem Sitzbodenmodul mit einem beabstandet angeordneten Komfortelement,
- Fig. 2: eine Seitenansicht des Sitzbodenmoduls in einem an Tragrohren eines Flugzeugsitzes angebundenen Zustand,
- Fig. 3: eine schematische Ansicht einer Unterseite des Sitzbodenmoduls und
- Fig. 4: eine schematische Ansicht eines erfindungsgemäßen Abstandshalters.

### Beschreibung des Ausführungsbeispiels

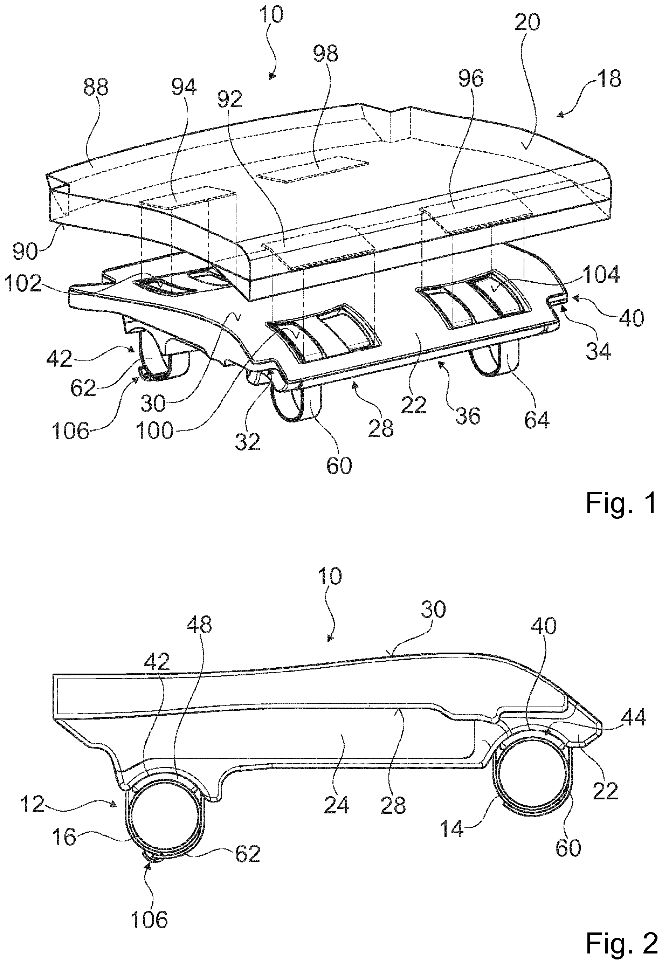

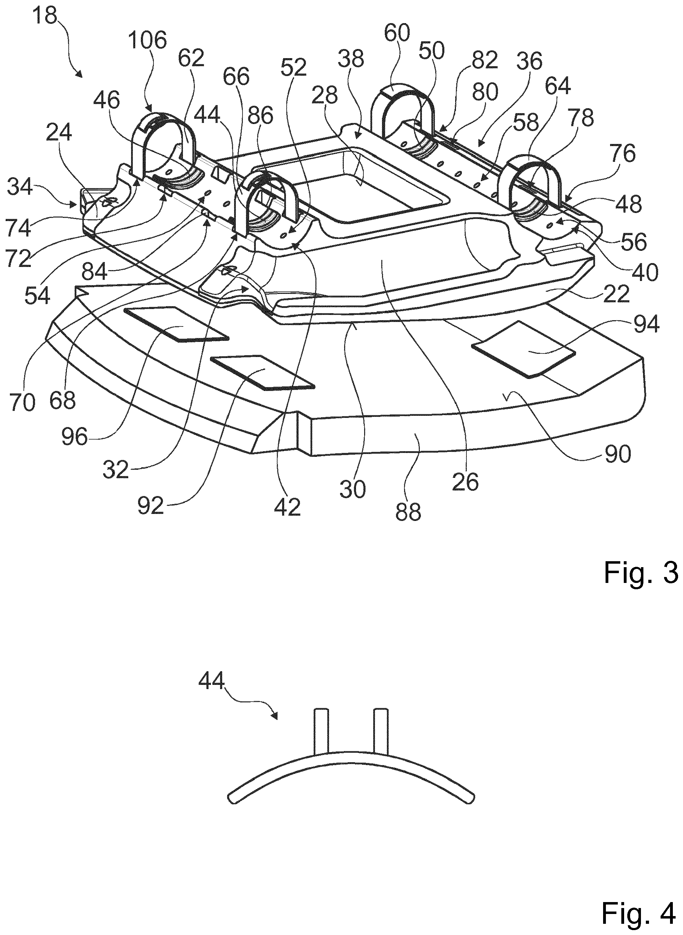

Die Figuren 1 bis 4 zeigen eine erfindungsgemäße Flugzeugsitzvorrichtung. Die Sitzvorrichtung ist Teil eines lediglich teilweise dargestellten Flugzeugsitzes 10. Dabei ist es denkbar, dass der Flugzeugsitz 10 Teil einer nicht näher dargestellten Sitzreihe ist. Der Flugzeugsitz 10 ist in einem montierten Zustand in einer nicht näher dargestellten Flugzeugkabine eines Flugzeugs aufgeständert. Zur Aufständerung weist die Flugzeugkabine vorzugsweise zwei parallel verlaufende Befestigungsschienen auf, über die der Flugzeugsitz 10 fest mit dem Kabinenboden verbunden werden kann. Der Flugzeugsitz 10 umfasst eine Aufständereinheit 12, über die der Flugzeugsitz 10 auf dem Kabinenboden aufgeständert ist. Die Aufständereinheit 12 umfasst wenigstens zwei nicht näher dargestellte vordere Sitzfüße und zwei nicht näher dargestellte hintere Sitzfüße, über die der Flugzeugsitz 10 auf dem Kabinenboden aufgeständert ist. Die Aufständereinheit 12 des Flugzeugsitzes 10 umfasst ein vorderes Tragrohr 14 und ein hinteres Tragrohr 16. Die Tragrohre 14, 16 bilden eine Tragstruktur des Flugzeugsitzes 10. Die Tragrohre 14, 16 verlaufen in Querrichtung des Flugzeugsitzes 10, die orthogonal zu einer Sitzrichtung des Flugzeugsitzes 10 ausgerichtet ist. Ist der Flugzeugsitz 10 Teil einer Sitzreihe, sind die Tragrohre 14, 16 auch Teil einer Tragstruktur der weiteren Flugzeugsitze der Sitzreihe. Die Tragrohre 14, 16 weisen einen ringförmigen Querschnitt auf. Dabei sind die Tragrohre 14, 16 dünnwandig ausgebildet. Grundsätzlich wäre es auch denkbar, dass der Flugzeugsitz 10 lediglich ein einzelnes Tragrohr aufweist.

Die Flugzeugsitzvorrichtung weist ein Sitzbodenmodul 18 auf. Das Sitzbodenmodul 18 ist dazu vorgesehen, einen Sitzbereich 20 des Flugzeugsitzes 10 auszubilden, auf dem ein Passagier, insbesondere während eines Flugs, sitzen kann. Das Sitzbodenmodul 18 ist über die beiden Tragrohre 14, 16 mit der Aufständereinheit 12 des Flugzeugsitzes 10 verbunden. Das Sitzbodenmodul 18 weist einen Grundkörper 22 auf. Der Grundkörper 22 bildet eine tragende Struktur des Sitzbodenmoduls 18. Der Grundkörper 22 ist aus einem Hartschaum gebildet. Der Grundkörper 22 ist insbesondere aus einem Polypropylen-Schaum (EPP) gebildet. Dabei ist der Grundkörper 22 komplett von einem Polypropylen-Schaum gebildet. Grundsätzlich wäre es auch denkbar, dass der Grundkörper 22 aus einem anderen, dem Fachmann als sinnvoll erscheinenden Hartschaum gebildet ist oder dass der Grundkörper 22 aus einer Kombination verschiedener Hart- und/oder Weichschäume gebildet ist. Grundsätzlich ist es auch denkbar, dass der Grundkörper 22 aus mehreren Bereichen aus demselben Polypropylen-Schaum gebildet ist, wobei die unterschiedlichen Bereiche jeweils eine andere Dichte aufweisen. Der Grundkörper 22 weist eine im Wesentlichen rechteckige Grundform auf, wobei der Grundkörper 22 sowohl auf seiner Unterseite 28 als auch auf seiner Oberseite 30 sowie den Seitenkanten eine Kontur aufweist, durch die sich der Grundkörper 22 von einer reinen rechteckigen Grundform unterscheidet. Der Grundkörper 22 weist zwei Seitenbereiche 32, 34 auf, in denen der Grundkörper 22 dünner ausgebildet ist. In den Seitenbereichen 32, 34, die sich jeweils von einer Seitenkante des Grundkörpers 22 bis auf etwa ein Viertel einer Gesamtbreite des Grundkörpers 22 nach innen erstrecken, weist der Grundkörper 22 an seiner Unterseite 28 jeweils eine Ausnehmung auf. Der Grundkörper 22 weist zwischen den beiden Seitenbereichen 32, 34 einen Mittelbereich 36 auf. In dem Mittelbereich 36 ist der Grundkörper 22 dicker ausgebildet als in den Seitenbereichen 32, 34. In dem Mittelbereich 36 weist der Grundkörper 22 Ausnehmungen 38 auf, die zur Gewichtsreduzierung in den Grundkörper 22 eingebracht sind.

Das Sitzbodenmodul 18 weist zwei Verstärkungselemente 24, 26 auf. Die Verstärkungselemente 24, 26 sind auf einer Unterseite 28 des Grundkörpers 22 angeordnet. Grundsätzlich ist es auch denkbar, dass die Verstärkungselemente 24, 26 auf einer Oberseite des Grundkörpers 22 angeordnet sind oder wahlweise auch in den Grundkörper 22 eingebracht sind. Die Verstärkungselemente 24, 26 sind von einer dünnen Kunststoffschicht gebildet. Die Verstärkungselemente 24, 26 sind als Kunststoffelemente ausgebildet. Die Verstärkungselemente 24, 26 sind in den Seitenbereichen 32, 34 des Grundkörpers 22 angeordnet. Die Verstärkungselemente 24, 26 erstrecken sich in den Seitenbereichen 32, 34 jeweils von einem vorderen Ende des Grundkörpers 22 nach hinten in Richtung eines hinteren Endes des Grundkörpers 22. An dem hinteren Ende des Grundkörpers 22 lassen die Verstärkungselemente 24, 26 einen Bereich frei. Die Verstärkungselemente 24, 26 weisen auf einer dem Grundkörper 22 zugewandten Seite eine Kontur auf, die einer Kontur des Grundkörpers 22 entspricht. Dadurch liegen die Verstärkungselemente 24, 26 in montiertem Zustand auf der Unterseite 28 des Grundkörpers 22 an. Die Verstärkungselemente 24, 26 sind form- und stoffschlüssig mit dem Grundkörper 22 verbunden. Dazu werden in einem Herstellungsprozess des Grundkörpers 22 die fertigen Verstärkungselemente 24, 26 mit in eine Herstellungsvorrichtung eingelegt und der Grundkörper 22 auf eine dem Fachmann bekannte Weise auf die Verstärkungselemente 24, 26 aufgeschäumt. Bei dem Schäumvorgang des Grundkörpers 22 verbindet sich das Material des Grundkörpers 22 stoff- und formschlüssig mit den Verstärkungselementen 24, 26. Grundsätzlich wäre es auch denkbar, dass die Verstärkungselemente 24, 26 nach einem Herstellprozess des Grundkörpers 22 mit diesem verklebt oder verschweißt werden. Grundsätzlich ist auch eine andere Verbindungsart, wie beispielsweise eine Verbindung über dem Fachmann als sinnvoll erscheinende Form- und/oder Kraftschlusselemente, denkbar.

Zur Anbindung an die Tragrohre 14, 16 weist das Sitzbodenmodul 18 einen ersten, vorderen Aufnahmebereich 40 und einen zweiten, hinteren Aufnahmebereich 42 auf. Der vordere Aufnahmebereich 40 ist dabei dazu vorgesehen, das vordere Tragrohr 14 aufzunehmen. Der hintere Aufnahmebereich 42 ist dazu vorgesehen, das hintere Tragrohr 16 aufzunehmen. Die Aufnahmebereiche 40, 42 sind von dem Grundkörper 22 ausgebildet. Der erste, vordere Aufnahmebereich 40 ist dabei auf einer Vorderseite des Grundkörpers 22 angeordnet. Der zweite, hintere Aufnahmebereich 42 ist auf einer Hinterseite des Grundkörpers 22 angeordnet. Die Aufnahmebereiche 40, 42 sind auf der Unterseite 28 des Grundkörpers 22 angeordnet. Die Aufnahmebereiche 40, 42 sind als längliche Ausnehmungen ausgebildet. Die Aufnahmebereiche 40, 42 sind schalenförmig ausgebildet. Die Aufnahmebereiche 40, 42 erstrecken sich in Querrichtung. Die als längliche Ausnehmungen ausgebildeten Aufnahmebereiche 40, 42 weisen eine Form auf, die korrespondierend zu einer Form der Tragrohre 14, 16 ausgebildet ist. Die Aufnahmebereiche 40, 42 sind beabstandet zu den Verstärkungselementen 24, 26 angeordnet. Die Aufnahmebereiche 40, 42 sind in anderen Bereichen des Grundkörpers 22 angeordnet als die Verstärkungselemente 24, 26. Der erste, vordere Aufnahmebereich 40 erstreckt sich in Querrichtung über den gesamten Mittelbereich 36. Der zweite, hintere Aufnahmebereich 42 erstreckt sich in Querrichtung über den gesamten Mittelbereich 36 und ragt in beide Seitenbereiche 32, 34 hinein.

Das Sitzbodenmodul 18 weist je Aufnahmebereich 40, 42 jeweils zwei Abstandshalter 44, 46, 48, 50 auf. Grundsätzlich wäre es auch denkbar, dass das Sitzbodenmodul 18 je Aufnahmebereich 40, 42 eine andere Anzahl von Abstandshaltern 44, 46, 48, 50 aufweist. In dem vorderen Aufnahmebereich 40 sind zwei Abstandshalter 44, 46 angeordnet. In dem hinteren Aufnahmebereich 42 sind zwei Abstandshalter 48, 50 angeordnet. Die Abstandshalter 44, 46, 48, 50 sind in montierten Zustand in dem entsprechenden Aufnahmebereich 40, 42 angeordnet und dazu vorgesehen, den Grundkörper 22 und das entsprechende Tragrohr 14, 16 voneinander zu beabstanden. In montiertem Zustand sind die Abstandshalter 44, 46, 48, 50 in dem entsprechenden Aufnahmebereich 40, 42 zwischen dem Grundkörper 22 und dem entsprechenden Tragrohr 14, 16 angeordnet. Die Tragrohre 14, 16 weisen keinen direkten Berührpunkt mit dem entsprechenden Aufnahmebereich 40, 42 auf, in dem sie angeordnet sind. Die Tragrohre 14, 16 sind über die Abstandshalter 44, 46, 48, 50 mit dem Grundkörper 22 verbunden. Die Abstandshalter 44, 46, 48, 50 liegen mit einer Außenseite in den Aufnahmebereichen 40, 42 auf. Auf ihren Innenseiten bilden die Abstandshalter 44, 46, 48, 50 Auflageflächen für das entsprechende Tragrohr 14, 16 aus. Dabei weisen die Abstandshalter 44, 46, 48, 50 auf ihren Innenseiten eine, einen Reibungskoeffizienten erhöhende Beschichtung auf, die in den Zeichnungen nicht näher dargestellt ist. Grundsätzlich ist es auch denkbar, dass die Abstandshalter 44, 46, 48, 50 auf ihren Innenseiten jeweils eine Gummierung oder ein Rippenbild aufweisen, das einen Reibungskoeffizienten der Innenseiten erhöht. Dadurch kann eine Reibkraft zwischen den Abstandshaltern 44, 46, 48, 50 und dem entsprechenden Tragrohr 14, 16 vorteilhaft erhöht werden. Dadurch kann ein Verrutschen des Sitzbodenmoduls 18 auf den Tragrohren 14, 16 vorteilhaft erschwert werden. Durch die Abstandshalter 44, 46, 48, 50 wird zwischen dem Grundkörper 22 und den Tragrohren 14, 16 jeweils ein Raum geschaffen, in dem insbesondere Anbindungselemente angeordnet sind, über die die Sitzfüße mit den Tragrohren 14, 16 verbunden sind. Durch die Verwendung der Abstandshalter 44, 46, 48, 50 kann auf extra in den Grundkörper 22 eingebrachte Ausnehmungen verzichtet werden, um für die Anbindungselemente Platz zu schaffen.

Das Sitzbodenmodul 18 weist in den Aufnahmebereichen 40, 42 jeweils mehrere Formschluss- und Kraftschlusselemente 52, 54, 56, 58 zur Anbindung der Abstandshalter 44, 46, 48, 50 auf. Aus Gründen der Übersichtlichkeit sind in den Zeichnungen nur für vier der Formschluss- und Kraftschlusselemente 52, 54, 56, 58 Bezugszeichen vergeben. Die entsprechenden anderen nicht weiter bezeichneten Formschluss- und Kraftschlusselemente sind gleich ausgebildet wie die bezeichneten Formschluss- und Kraftschlusselemente 52, 54, 56, 58. In dem hinteren Aufnahmebereich 42 weist das Sitzbodenmodul 18 sieben Formschluss- und Kraftschlusselemente 52, 54 auf. In dem vorderen Aufnahmebereich 40 weist das Sitzbodenmodul 18 neun Formschluss- und Kraftschlusselemente 56, 58 auf. Grundsätzlich ist es natürlich auch denkbar, dass das Sitzbodenmodul 18 in den beiden Aufnahmebereichen 40, 42 jeweils eine andere Anzahl von Formschluss- und Kraftschlusselementen 52, 54, 56, 58 aufweist. Die Formschluss- und Kraftschlusselemente 52, 54, 56, 58 sind in den Aufnahmebereichen 40, 42 in Querrichtung beabstandet zueinander angeordnet. Dabei weisen die Formschluss- und Kraftschlusselemente 52, 54, 56, 58 jeweils einen gleichmäßigen Abstand zueinander auf. Grundsätzlich ist es auch denkbar, dass die Formschluss- und Kraftschlusselemente 52, 54, 56, 58 in den Aufnahmebereichen 40, 42 unregelmäßig beabstandet sind. Über je ein Formschluss- und Kraftschlusselement 52, 54, 56, 58 ist jeweils ein Abstandshalter 44, 46, 48, 50 verliersicher mit dem Grundkörper 22 koppelbar. Über die Formschluss- und Kraftschlusselemente 52, 54, 56, 58 sind die Abstandshalter 44, 46, 48, 50 verliersicher in dem jeweiligen Aufnahmebereich 40, 42 befestigbar. Die Formschluss- und Kraftschlusselemente 52, 54, 56, 58 sind jeweils von zwei in dem jeweiligen Aufnahmebereich 40, 42 in den Grundkörper 22 eingebrachten Ausnehmungen ausgebildet. Die Ausnehmungen, die die Formschluss- und Kraftschlusselemente 52, 54, 56, 58 ausbilden, weisen dabei einen runden Querschnitt auf. Grundsätzlich ist es auch denkbar, dass die Ausnehmungen, die die Formschluss- und Kraftschlusselemente 52, 54, 56, 58 ausbilden, einen anderen, beispielsweise einen ovalen, einen rechteckigen, einen dreieckigen oder einen kreuzförmigen Querschnitt aufweisen. Die Abstandshalter 44, 46, 48, 50 weisen jeweils nicht näher dargestellte Formschluss- und Kraftschlusselemente auf, die korrespondierend zu den Formschluss- und Kraftschlusselementen 52, 54, 56, 58 des Sitzbodenmoduls 18 ausgebildet sind. Die Formschluss- und Kraftschlusselemente der Abstandshalter 44, 46, 48, 50 sind als Stifte ausgebildet. In montiertem Zustand sind die als Stifte ausgebildeten Formschluss- und Kraftschlusselemente der Abstandshalter 44, 46, 48, 50 in den als Ausnehmungen ausgebildeten Formschluss- und Kraftschlusselementen 52, 54, 56, 58 des Sitzbodenmoduls 18 angeordnet. Die als Ausnehmungen ausgebildeten Formschluss- und Kraftschlusselemente 52, 54, 56, 58 des Sitzbodenmoduls 18 sind in einem Zustand, bevor die Abstandshalter 44, 46, 48, 50 mit ihnen verbunden sind, kleiner ausgebildet als die als Stifte ausgebildeten Formschluss- und Kraftschlusselemente der Abstandshalter 44, 46, 48, 50. Werden die Abstandshalter 44, 46, 48, 50 über ihre Formschluss- und Kraftschlusselemente mit den entsprechenden Formschluss- und Kraftschlusselementen 52, 54, 56, 58 des Sitzbodenmoduls 18 verbunden, verformen die als Stifte ausgebildeten Formschluss- und Kraftschlusselemente der Abstandshalter 44, 46, 48, 50 die entsprechenden Formschluss- und Kraftschlusselemente 52, 54, 56, 58 des Sitzbodenmoduls 18 und erzeugen dadurch einen Form- und/oder Kraftschluss zwischen den Abstandshaltern 44, 46, 48, 50 und dem Grundkörper 22. Dadurch sind die Abstandshalter 44, 46, 48, 50 verliersicher in den Aufnahmebereichen 40, 42 angeordnet. Durch die verschiedenen, beabstandet zueinander angeordneten Formschluss- und Kraftschlusselemente 52, 54, 56, 58 des Sitzbodenmoduls 18 können die Abstandshalter 44, 46, 48, 50 je nach Ausgestaltung des Flugzeugsitzes 10 an unterschiedlichen Positionen in den Aufnahmebereichen 40, 42 angeordnet werden. Dadurch ist das Sitzbodenmodul 18 einfach für unterschiedliche Flugzeugsitztypen einstellbar, ohne dass konstruktiv etwas an dem Grundkörper 22 geändert werden müsste.

Die Flugzeugsitzvorrichtung weist vier Befestigungselemente 60, 62, 64, 66 auf, über die der Grundkörper 22 fest mit den Tragrohren 14, 16 verbindbar ist. Dabei ist der Grundkörper 22 über jeweils zwei Befestigungselemente 60, 62, 64, 66 mit einem Tragrohr 14, 16 verbindbar. Grundsätzlich ist es auch denkbar, dass die Flugzeugsitzvorrichtung eine andere Anzahl an Befestigungselementen 60, 62, 64, 66 zur Anbindung an die Tragrohre 14, 16 aufweist. Die Befestigungselemente 60, 62, 64, 66 zur Anbindung des Grundkörpers 22 an die Tragrohre 14, 16 sind jeweils als Band ausgebildet. Die Befestigungselemente 62, 66 sind jeweils als ein Flausch- und Hakenband ausgebildet. Die als Flausch- und Hakenbänder ausgebildeten Befestigungselemente 62, 66 weisen an Außenseiten jeweils einen Flauschbereich und ihren Innenseiten einen Hakenbereich auf. Zum Schließen eines als Flausch- und Hakenband ausgebildeten Befestigungselements 62, 66 werden der Flauschbereich und der Hakenbereich, die bei einer Umschlingung zumindest teilweise einander zugewandt sind, zusammengedrückt und dadurch miteinander gekoppelt. Dadurch sind die als Flausch- und Hakenbänder ausgebildeten Befestigungselemente 62, 66 verschließbar. Zum Öffnen der als Flausch- und Hakenbänder ausgebildeten Befestigungselemente 62, 66 werden der Flauschbereich und der Hakenbereich durch Aufbringen einer Demontagekraft auseinandergezogen, wodurch sich eine formschlüssige Verbindung zwischen dem Flauschbereich und dem Hakenbereich löst und das Befestigungselement 62, 66 geöffnet wird. Die Befestigungselemente 60, 64, die ebenfalls als Band ausgebildet sind, weisen zum Schließen an einem ersten Ende ein Hakenelement 106 auf. An einem zweiten Ende weisen die Befestigungselemente 60, 64 zumindest eine Öse auf, die mit dem Hakenelement 106 gekoppelt werden kann. Zur Kopplung wird dabei das Hakenelement 106 durch die Öse geführt. Dabei ist es denkbar, dass die Befestigungselemente mehrere, zueinander beabstandete Ösen aufweisen, sodass die Befestigungselemente 60, 64 in verschiedenen Größen geschlossen werden können. Zur Verbindung der Befestigungselemente 60, 62, 64, 66 mit dem Grundkörper 22 weist der Grundkörper 22 je Aufnahmebereich 40, 42 vier Kopplungsbereiche 68, 70, 72, 74, 76, 78, 80, 82 auf. Die Kopplungsbereiche 68, 70, 72, 74 sind dem hinteren Aufnahmebereich 2 zugeordnet. Die Kopplungsbereiche 76, 78, 80, 82 sind dem vorderen Aufnahmebereich 40 zugeordnet. Grundsätzlich ist es auch denkbar, dass die Befestigungselemente 60, 62, 64, 66 anders ausgebildet sind und mittels anderer, dem Fachmann als sinnvoll erscheinender Mittel geschlossen werden können.

Jeder der Kopplungsbereiche 68, 70, 72, 74, 76, 78, 80, 82 weist zwei beabstandet zueinander angeordnete Durchgangslöcher 84, 86 auf, die in den Grundkörper 22 eingebracht sind und jeweils von der Unterseite 28 des Grundkörpers 22 bis an die Oberseite 30 des Grundkörpers 22 reichen. Dabei sind in den Zeichnungen aus Gründen der Übersichtlichkeit lediglich die Durchgangslöcher 84, 86 des Kopplungsbereichs 70 bezeichnet. Durch die Durchgangslöcher 84, 86 der Kopplungsbereiche 68, 70, 72, 74, 76, 78, 80, 82 sind jeweils die als Band ausgebildeten Befestigungselemente 60, 62, 64, 66 geführt, um eine formschlüssige Verbindung mit dem Grundkörper 22 einzugehen. Die Durchgangslöcher 84, 86 eines der Kopplungsbereiche 68, 70, 72, 74, 76, 78, 80, 82 sind dabei jeweils gegenüberliegend auf einer Seite eines Aufnahmebereichs 40, 42 angeordnet. Durch die Vielzahl von Kopplungsbereichen 68, 70, 72, 74, 76, 78, 80, 82 können die als Band ausgebildeten Befestigungselemente 60, 62, 64, 66 jeweils an einer Stelle mit dem Grundkörper 22 gekoppelt werden, sodass diese um das entsprechende Tragrohr 14, 16 geführt werden können. Da in unterschiedlichen Flugzeugsitzkonfigurationen die Sitzfüße an anderen Positionen angeordnet sein können, kann eine Anbindung des Grundkörpers 22 an die Tragrohre 14, 16 einfach variiert werden, dadurch dass die Befestigungselemente 60, 62, 64, 66 über die entsprechenden Kopplungsbereiche 68, 70, 72, 74, 76, 78, 80, 82 mit dem Grundkörper 22 gekoppelt werden.

Das Sitzbodenmodul 18 weist ein Komfortelement 88 auf. Das Komfortelement 88 ist von einem Polsterelement aus einem Weichschaum und einem nicht näher dargestellten Bezug gebildet. In den Zeichnungen ist das Komfortelement 88 lediglich schematisch dargestellt. Mit einer Oberseite, die in einem montierten Zustand dem Grundkörper 22 abgewandt ist, bildet das Komfortelement 88 den Sitzbereich 20 aus. An einer Unterseite 90, die in einem montierten Zustand dem Grundkörper 22 zugewandt ist, weist das Komfortelement 88 vier Anbindungsbereiche 92, 94, 96, 98 auf. Die Anbindungsbereiche 92, 94, 96, 98 sind als ein Hakenband ausgebildet. Die Befestigungselemente 60, 62, 64, 66, mittels denen der Grundkörper 22 mit den Tragrohren 14, 16 gekoppelt wird, weisen jeweils einen Anbindungsbereich 100, 102, 104 auf. Die Anbindungsbereiche 100, 102, 104 der Befestigungselemente 60, 62, 64, 66 sind als Flauschbänder ausgebildet. Dabei sind die als Flauschbänder ausgebildeten Anbindungsbereiche 102 der Befestigungselemente 60, 64 einstückig mit den Flauschbereichen ausgebildet, die die Befestigungselemente 60, 64 zum Schließen aufweisen. Die Anbindungsbereiche 100, 102, 104 der Befestigungselemente 60, 62, 64, 66 sind korrespondierend zu den Anbindungsbereichen 92, 94, 96, 98 des Komfortelements 88 ausgebildet. Grundsätzlich wäre es auch denkbar, dass die Anbindungsbereiche 100, 102, 104 der Befestigungselemente 60, 62, 64, 66 als Hakenbänder und die Anbindungsbereiche 92, 94, 96, 98 des Komfortelements 88 als Flauschbänder ausgebildet sind. Grundsätzlich wäre es auch denkbar, dass die Anbindungsbereiche 100, 102, 104 der Befestigungselemente 60, 62, 64, 66 und die Anbindungsbereiche 92, 94, 96, 98 des Komfortelements 88 als andere, dem Fachmann als sinnvoll erscheinende, korrespondierend zueinander ausgebildete Kraft- und/oder Formschlusselemente, wie beispielsweise Druckknöpfe, ausgebildet sind. Über die Anbindungsbereiche 100, 102, 104 der Befestigungselemente 60, 62, 64, 66 und die Anbindungsbereiche 92, 94, 96, 98 des Komfortelements 88 ist das Komfortelement 88 verliersicher mit dem Grundkörper 22 verbindbar. Dabei kann das Komfortelement 88 zerstörungsfrei von dem Grundkörper 22 getrennt werden. Grundsätzlich ist es ebenfalls denkbar, dass das Komfortelement 88 an seiner Unterseite 90 weitere Anbindungsbereiche aufweist, wobei der Grundkörper 22 dabei an seiner Oberseite 30 entsprechend korrespondierend ausgebildete Anbindungsbereiche aufweisen würde.

### Bezugszeichen

- 10: Flugzeugsitz
- 12: Aufständereinheit
- 14: Tragrohr
- 16: Tragrohr
- 18: Sitzbodenmodul
- 20: Sitzbereich
- 22: Grundkörper
- 24: Verstärkungselement
- 26: Verstärkungselement
- 28: Unterseite
- 30: Oberseite
- 32: Seitenbereich
- 34: Seitenbereich
- 36: Mittelbereich
- 38: Ausnehmung
- 40: Aufnahmebereich
- 42: Aufnahmebereich
- 44: Abstandshalter
- 46: Abstandshalter
- 48: Abstandshalter
- 50: Abstandshalter
- 52: Formschluss- und Kraftschlusselement
- 54: Formschluss- und Kraftschlusselement
- 56: Formschluss- und Kraftschlusselement
- 58: Formschluss- und Kraftschlusselement
- 60: Befestigungselement
- 62: Befestigungselement
- 64: Befestigungselement
- 66: Befestigungselement
- 68: Kopplungsbereich
- 70: Kopplungsbereich
- 72: Kopplungsbereich
- 74: Kopplungsbereich
- 76: Kopplungsbereich
- 78: Kopplungsbereich
- 80: Kopplungsbereich
- 82: Kopplungsbereich
- 84: Durchgangsloch
- 86: Durchgangsloch
- 88: Komfortelement
- 90: Unterseite
- 92: Anbindungsbereich
- 94: Anbindungsbereich
- 96: Anbindungsbereich
- 98: Anbindungsbereich
- 100: Anbindungsbereich
- 102: Anbindungsbereich
- 104: Anbindungsbereich
- 106: Hakenelement

## Patentansprüche

1. Flugzeugsitzvorrichtung mit einem Sitzbodenmodul (18), das wenigstens einen Grundkörper (22), der zumindest im Wesentlichen aus einem Hartschaum ausgebildet ist, wenigstens ein auf einer Oberseite (30) des Grundkörpers (22) angeordnetes Komfortelement (88), wenigstens einen Aufnahmebereich (40, 42) zur Anbindung an ein Tragrohr (14, 16) und wenigstens ein Befestigungselement (60, 62, 64, 66) zur Anbindung an das Tragrohr (14, 16) aufweist, wobei der Grundkörper (22) wenigstens zwei Kopplungsbereiche (68, 70, 72, 74, 76, 78, 80, 82) aufweist, über die das wenigstens eine Befestigungselement (60, 62, 64, 66) wahlweise an den Grundkörper (22) angebunden werden kann, **dadurch gekennzeichnet, dass** das Sitzbodenmodul (18) wenigstens einen Abstandshalter (44, 46, 48, 50) aufweist, der in einem montierten Zustand in dem wenigstens einen Aufnahmebereich (40, 42) angeordnet und dazu vorgesehen ist, den Grundkörper (22) und das Tragrohr (14, 16) voneinander zu beabstanden.

2. Flugzeugsitzvorrichtung nach Anspruch 1, **dadurch gekennzeichnet, dass** die Kopplungsbereiche (68, 70, 72, 74, 76, 78, 80, 82) in den Aufnahmebereichen (40, 42) angeordnet sind.

3. Flugzeugsitzvorrichtung nach Anspruch 1 oder 2, **dadurch gekennzeichnet, dass** das Sitzbodenmodul (18) in dem wenigstens einen Aufnahmebereich (40, 42) zumindest ein Formschluss- und/oder Kraftschlusselement (52, 54, 56, 58) aufweist, über das der Abstandshalter (44, 46, 48, 50) verliersicher in dem Aufnahmebereich (40, 42) befestigbar ist.

4. Flugzeugsitzvorrichtung nach Anspruch 3, **dadurch gekennzeichnet, dass** das Sitzbodenmodul (18) in dem wenigstens einen Aufnahmebereich (40, 42) weitere, zueinander beabstandet angeordnete Formschluss- und/oder Kraftschlusselemente (52, 54, 56, 58) aufweist, über die der wenigstens eine Abstandshalter (44, 46, 48, 50) verliersicher in dem Aufnahmebereich (40, 42) befestigbar ist.

5. Flugzeugsitzvorrichtung nach einem der vorhergehenden Ansprüche, **gekennzeichnet durch** das wenigstens eine Befestigungselement (60, 62, 64, 66), das als ein Band ausgebildet ist, über das der Grundkörper (22) mit dem Tragrohr (14, 16) verbindbar ist.

6. Flugzeugsitzvorrichtung nach einem der vorhergehenden Ansprüche, **dadurch gekennzeichnet, dass** das wenigstens eine Befestigungselement (60, 62, 64, 66) als ein Flausch- und Hakenband ausgebildet ist.

7. Flugzeugsitzvorrichtung nach einem der vorhergehenden Ansprüche, **dadurch gekennzeichnet, dass** das wenigstens eine Befestigungselement (60, 62, 64, 66) wenigstens einen Anbindungsbereich (100, 102, 104) aufweist, über den das Komfortelement (88) fest mit dem Befestigungselement (60, 62, 64, 66) verbindbar ist.

8. Flugzeugsitzvorrichtung nach Anspruch 7, **dadurch gekennzeichnet, dass** der Anbindungsbereich (100, 102, 104) des wenigstens einen Befestigungselements (60, 62, 64, 66) als ein Flausch- oder Hakenbereich ausgebildet ist.

9. Flugzeugsitzvorrichtung nach einem der vorhergehenden Ansprüche, **dadurch gekennzeichnet, dass** das Sitzbodenmodul (18) wenigstens ein auf einer Unterseite (28) des Grundkörpers (22) angeordnetes Verstärkungselement (24, 26) aufweist.

10. Flugzeugsitzvorrichtung nach Anspruch 9, **dadurch gekennzeichnet, dass** der wenigstens eine Aufnahmebereich (40, 42) zur Anbindung an eines der Tragrohre (14, 16) von dem Grundkörper (22) ausgebildet und beabstandet zu dem wenigstens einen Verstärkungselement (24, 26) angeordnet ist.

11. Flugzeugsitzvorrichtung nach Anspruch 9 oder 10, **dadurch gekennzeichnet, dass** das Verstärkungselement (24, 26) von einer im Wesentlichen dünnen Kunststoffschicht gebildet ist.

12. Flugzeugsitz mit einer Flugzeugsitzvorrichtung nach einem der vorhergehenden Ansprüche.

## Claims

1. Airplane seat device
with a seat bottom module (18) comprising
at least one base body (22), which is implemented at least substantially of a rigid foam,
at least one comfort element (88), which is arranged on an upper side (30) of the base body (22),
at least one receiving region (40, 42) for a connection to a support tube (14, 16) and
at least one fixation element (60, 62, 64, 66) for a connection to the support tube (14, 16),
the base body (22) comprising at least two coupling regions (68, 70, 72, 74, 76, 78, 80, 82), via which the at least one fixation element (60, 62, 64, 66) can be selectively connected to the base body (22),
**characterised in that** the seat bottom module (18) comprises at least one spacer (44, 46, 48, 50), which is in a mounted state arranged in the at least one receiving region (40, 42) and is configured to space the base body (22) and the support tube (14, 16) apart from each other.

2. Airplane seat device according to claim 1,
**characterised in that** the coupling regions (68, 70, 72, 74, 76, 78, 80, 82) are arranged in the receiving regions (40, 42).

3. Airplane seat device according to claim 1 or 2,
**characterised in that** the seat bottom module (18) comprises in the at least one receiving region (40, 42) at least one form-fit and/or force-fit element (52, 54, 56, 58), via which the spacer (44, 46, 48, 50) can be fixated in the receiving region (40, 42) in a loss-proof manner.

4. Airplane seat device according to claim 3,
**characterised in that** the seat bottom module (18) comprises in the at least one receiving region (40, 42) further form-fit and/or force-fit elements (52, 54, 56, 58), which are spaced apart from each other and via which the at least one spacer (44, 46, 48, 50) can be fixated in the receiving region (40, 42) in a loss-proof manner.

5. Airplane seat device according to one of the preceding claims,
**characterised by** the at least one fixation element (60, 62, 64, 66), which is embodied as a strap via which the base body (22) can be connected with the support tube (14, 16).

6. Airplane seat device according to one of the preceding claims,
**characterised in that** the at least one fixation element (60, 62, 64, 66) is embodied as a hook-and-loop strap.

7. Airplane seat device according to one of the preceding claims,
**characterised in that** the at least one fixation element (60, 62, 64, 66) comprises at least one connection region (100, 102, 104), via which the comfort element (88) is fixedly connectable with the fixation element (60, 62, 64, 66).

8. Airplane seat device according to claim 7,
**characterised in that** the connection region (100, 102, 104) of the at least one fixation element (60, 62, 64, 66) is embodied as a hook-or-loop region.

9. Airplane seat device according to one of the preceding claims,
**characterised in that** the seat bottom module (18) comprises at least one reinforcement element (24, 26), which is arranged on an underside (28) of the base body (22).

10. Airplane seat device according to claim 9,
**characterised in that** the at least one receiving region (40, 42) is implemented by the base body (22) for a connection to one of the support tubes (14, 16) and is arranged such that it is spaced apart from the at least one reinforcement element (24, 26).

11. Airplane seat device according to claim 9 or 10,
**characterised in that** the reinforcement element (24, 26) is implemented of a substantially thin layer of a synthetic material.

12. Airplane seat with an airplane seat device according to one of the preceding claims.

## Revendications

1. Dispositif de siège d'avion,
avec un module fond de siège (18) comportant
au moins un corps de base (22) qui est formé au moins sensiblement d'une mousse dure,
au moins un élément de confort (88) disposé sur un côté supérieur (30) du corps de base (22),
au moins une zone recevante (40, 42) pour un raccordement à un tube-support (14, 16) et
au moins un élément de fixation (60, 62, 64, 66) pour un raccordement au tube-support (14, 16),
le corps de base (22) comprenant au moins deux zones de couplage (68, 70, 72, 74, 76, 78, 80, 82), par le biais desquelles l'au moins un élément de fixation (60, 62, 64, 66) peut être raccordé sélectivement au corps de base (22), **c**
**aractérisé en ce que**
le module fond de siège (18) comprend au moins une entretoise (44, 46, 48, 50), qui en état monté est disposée dans l'au moins une zone recevante (40, 42) et est configurée pour maintenir un écartement entre le corps de base (22) et le tube-support (14, 16).

2. Dispositif de siège d'avion e selon la revendication 1,
**caractérisé en ce que** les zones de couplage (68, 70, 72, 74, 76, 78, 80, 82) sont disposés dans les zones recevantes (40, 42).

3. Dispositif de siège d'avion selon la revendication 1 ou 2,
**caractérisé en ce que** le module fond de siège (18) comprend dans l'au moins une zone recevante (40, 42) au moins un élément de liaison en forme ou en force (52, 54, 56, 58), par le biais duquel l'entretoise (44, 46, 48, 50) peut être fixée dans la zone recevante (40, 42) d'une manière inamovible.

4. Dispositif de siège d'avion selon la revendication 3,
**caractérisé en ce que** le module fond de siège (18) comporte dans l'au moins une zone recevante (40, 42) des éléments de liaison en forme ou en force de plus (52, 54, 56, 58), qui sont écartés l'un de l'autre et par le biais desquels l'au moins une entretoise (44, 46, 48, 50) peut être fixée dans la zone recevante (40, 42) d'une manière inamovible.

5. Dispositif de siège d'avion selon l'une quelconque des revendications précédentes,
**caractérisé par** l'au moins un élément de fixation (60, 62, 64, 66), qui est réalisé comme bande et par le biais duquel le corps de base (22) peut être lié au tube-support (14, 16).

6. Dispositif de siège d'avion selon l'une quelconque des revendications précédentes,
**caractérisé en ce que** l'au moins un élément de fixation (60, 62, 64, 66) est réalisé comme bande à crochets et boucles.

7. Dispositif de siège d'avion selon l'une quelconque des revendications précédentes,
**caractérisé en ce que** l'au moins un élément de fixation (60, 62, 64, 66) comporte au moins une zone de raccordement (100, 102, 104), par le biais de laquelle l'élément de confort (88) est fixement connectable avec l'élément de fixation (60, 62, 64, 66).

8. Dispositif de siège d'avion selon la revendication 7,
**caractérisé en ce que** la zone de raccordement (100, 102, 104) de l'au moins un élément de fixation (60, 62, 64, 66) est réalisée comme zone à crochets et boucles.

9. Dispositif de siège d'avion selon l'une quelconque des revendications précédentes,
**caractérisé en ce que** le module fond de siège (18) comprend au moins un élément de renforcement (24, 26) disposé sur un côté inférieur (28) du corps de base (22).

10. Dispositif de siège d'avion selon la revendication 9,
**caractérisé en ce que** l'au moins une zone recevante (40, 42) est implémentée par le corps de base (22) pour un raccordement à un de tubes-support (14, 16) et est disposée à l'écart de l'au moins un élément de renforcement (24, 26).

11. Dispositif de siège d'avion selon la revendication 9 ou 10,
**caractérisé en ce que** l'élément de renforcement (24, 26) est implémenté par une couche de matériau synthétique qui est essentiellement mince.

12. Siège d'avion avec un dispositif de siège d'avion selon l'une quelconque des revendications précédentes.
